# FASCICULE DE BREVET EUROPEEN

(11) **EP 1 447 251 B1**
(45) Date de publication et mention de la délivrance du brevet: **08.06.2005**
(21) Numéro de dépôt: 04364009.3
(22) Date de dépôt: 10.02.2004
(51) Int. Cl.: B60J 1/20

(54) **Store pour véhicule automobile à ralentisseur en fin de course, et véhicule correspondant**
Sonnenschutzvorrichtung mit Dämpfung am Bewegungsende
Vehicle blind with damping at the end of movement

(30) Priorité: 13.02.2003 FR 0301772
(43) Date de publication de la demande: 18.08.2004
(73) Titulaire: WAGON SAS, 79300 Bressuire (FR)
(72) Inventeur: Moreau, Stéphane, 49300 Le Puy Saint Bonnet (FR)
(74) Mandataire: Bioret, Ludovic

(56) Documents cités:
- EP-A- 1 123 825
- DE-A- 3 415 930
- US-A- 5 101 878
- US-A- 5 404 926
- US-A- 5 560 668

## Description

Le domaine de l'invention est celui des stores, notamment pour véhicule automobile. Plus précisément, l'invention concerne les stores à écran amovible, destiné à être déployé pour occulter une baie non rectangulaire, et circulant dans une fente, ménagée par exemple dans la tablette arrière d'un véhicule, ou dans un boîtier prévu à cet effet.

L'invention concerne notamment les stores à enrouleur, mais d'autres modes de repliement de la toile peuvent, bien sûr, être mis en oeuvre (tels que par exemple un repliement de la toile suivant des plis préformés).

Classiquement, un store à enrouleur présente une toile, ou rideau, formant écran, en position déployée, devant une baie vitrée. La toile est susceptible d'être déroulée ou enroulée au travers d'une fente ménagée dans l'habillage intérieur ou la tablette arrière d'un véhicule.

Une des extrémités de la toile est montée sur un rouleau, ou tube enrouleur, mobile en rotation. L'autre extrémité de la toile est munie d'une barre de tirage.

Un tel store est connu du document DE-3 415 930.

Selon une technique particulière, à laquelle s'applique notamment l'invention, la barre de tirage est solidaire de deux patins reliés ou montés à ses extrémités, et qui circulent dans des rails pour guider la barre de tirage, et par conséquent la toile d'occultation, entre sa position déployée et sa position repliée. Lorsque les rails ne sont pas parallèles (pour occulter une surface non rectangulaire, et par exemple trapézoïdale, comme celle d'une vitre arrière de véhicule) on peut alors prévoir des éléments coulissants par rapport au corps principal de la barre de tirage, de façon à former une barre de tirage télescopique.

Le déplacement de la barre de tirage ou de la toile peut être manuel ou motorisé. L'invention concerne essentiellement le cas des stores motorisés.

Selon une technique particulière, à laquelle s'applique notamment l'invention, les patins sont entraînés chacun par un câble monté dans une gaine elle-même logée dans le rail. Ces câbles sont entraînés par des moyens de motorisation, de façon à permettre le déploiement ou le repliement du store.

Dans de tels stores, il est souhaitable de disposer de moyens de sécurité, visant à empêcher, ou à tout le moins réduire le risque de blocage, et notamment de pincement d'un doigt lorsque la barre de tirage arrive en bout de course, en particulier lors du repliement. Dans le cas contraire, un doigt laissé par inadvertance entre la tablette arrière d'un véhicule, par exemple, et la barre de tirage peut être fortement pincé. En outre, le moteur peut alors forcer, et le cas échéant être détérioré.

Pour cette raison, on a développé des moyens électroniques relativement complexes, mesurant par exemple le couple du moteur, de façon à arrêter ce dernier en cas de résistance supérieure à un seuil donné. Ces systèmes électroniques présentent cependant l'inconvénient d'être relativement complexes, et donc coûteux.

L'invention a notamment pour objectif de pallier l'inconvénient de l'art antérieur.

Plus précisément, l'invention a notamment pour objectif de fournir une technique étant d'empêcher, ou au moins de limiter les risques de pincement, notamment lors du repliement du store, sans nécessiter la mise en oeuvre de moyens électroniques complexes.

Plus précisément, un objectif de l'invention est de fournir une telle technique, qui soit simple à mettre en oeuvre, et à monter, et qui présente un coût réduit.

Un autre objectif de l'invention est encore de fournir une telle technique, ne nécessitant pas de réglage particulier.

Ces objectifs, ainsi que d'autres qui apparaîtront par la suite sont atteints à l'aide d'un store pour véhicule automobile, comprenant une barre de tirage entraînant un écran souple et guidée à ses deux extrémités par des éléments de tirage circulant dans des rails prévus à cet effet. Selon l'invention, ce store comprend des moyens élastiques montés sur ledit câble d'actionnement et agissant sur au moins un desdits éléments de tirage lorsqu'il arrive en fin de course, lors du repliement et/ou du déploiement dudit écran souple, de façon à s'opposer à son déplacement et à le ralentir.

Ainsi, lorsqu'un doigt ou un objet se trouve entre la barre de tirage et un élément contre lequel elle vient en appui (par exemple une tablette arrière), la pression appliquée par la barre sur le doigt ou l'objet est progressive. Cela permet, en particulier, de retirer son doigt sans être fortement pincé.

Préférentiellement, lesdits moyens élastiques comprennent un ressort. Il peut notamment s'agir d'un ressort à spires jointives.

Selon un mode de réalisation préférentiel, ledit ressort est monté sur ledit câble d'actionnement entre ledit élément de tirage et un élément tampon. Dans le cas où ledit câble d'actionnement circule dans une gaine, une portion de cette dernière peut ainsi être supprimée et remplacée par ledit ressort.

Ladite portion supprimée peut présenter une longueur comprise par exemple entre 5 et 10 cm. Cette longueur est préférentiellement choisie pour offrir un débattement suffisant verticalement (par exemple 5 mm) pour permettre à un utilisateur de retirer son doigt.

Selon un mode de réalisation préférentiel, lesdits moyens élastiques sont montés au-dessus de l'élément de tirage correspondant, et travaillent en compression lors du repliement du store.

Selon un aspect particulier de l'invention, on prévoit que lesdits moyens élastiques agissent sur des moyens commande de motorisation dudit store, de façon à ralentir ou arrêter le déplacement de la barre de tirage lorsqu'au moins un seuil prédéterminé de compression ou de tension est atteint.

Cela permet de simplifier et de fiabiliser le contrôle de l'électronique de commande.

L'invention concerne également les véhicules automobiles comprenant au moins un store tel que décrit ci-dessus. Un tel store peut notamment êtr prévu pour occulter la vitre arrière du véhicule.

D'autres caractéristiques et avantages de l'invention apparaîtront plus clairement à la lecture de la description suivante d'un mode de réalisation préférentiel, donné à titre de simple exemple illustratif et non-limitatif, et des figures annexées, parmi lesquelles :
- les figures 1A et 1B illustrent schématiquement un exemple de store pouvant mettre en oeuvre l'invention, respectivement en position déployée et en position repliée ;
- la figure 2 est une vue en coupe d'une portion d'un des rails du dispositif des figures 1A et 1B, présentant le principe de l'invention.

L'invention peut s'appliquer à de nombreux types de stores, quels que soient leur forme et leur emplacement dans un véhicule automobile. Elle s'applique notamment aux stores dont la barre de tirage est guidée dans des rails, que ceux-ci soient classiquement parallèles ou non.

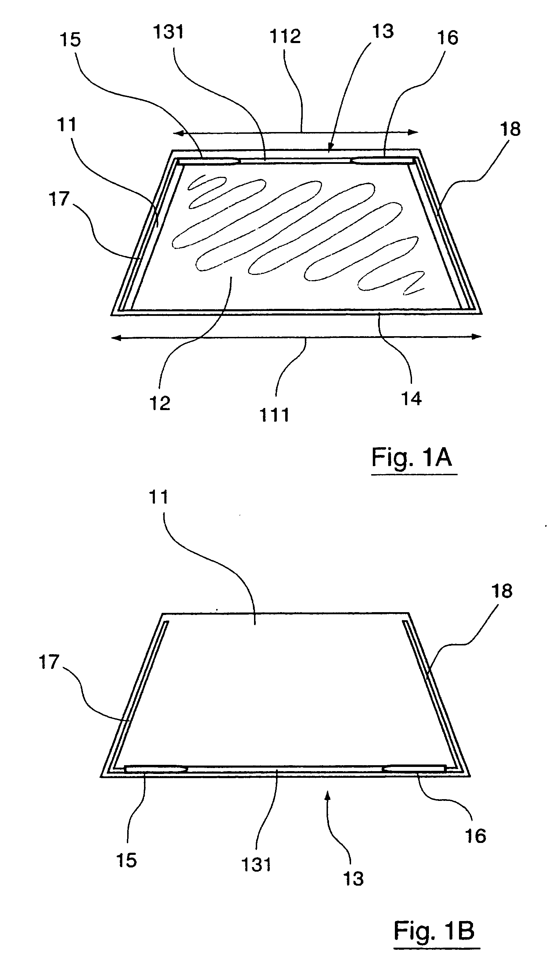

Les figures 1A et 1B donnent, à titre d'exemple particulier, une brève description d'un store mettant en oeuvre l'invention, destinée à occulter une vitre arrière trapézoïdale de véhicule.

L'écran souple permettant l'occultation de la vitre 11 est monté sur un tube enrouleur (non représenté) et logé dans un boîtier monté sous la tablette arrière. La toile 12 traverse une fente 14. Elle est entraînée par une barre de tirage 13, entre sa position repliée (figure 1B) et sa position déployée (figure 1A) et réciproquement. Les extrémités de cette barre de tirage 13 sont munies de patins, ou de roulettes, circulant dans des rails 17 et 18. Dans le cas où ces rails ne sont pas parallèles, la barre de tirage 13 est télescopique, de façon à compenser les variations d'écartement entre ces rails. Pour cela, des éléments coulissants 15 et 16 sont prévus aux extrémités du corps principal de la barre de tirage.

Dans le cas d'un système motorisé, les patins montés dans les rails peuvent être entraînés par un câble, lui-même entraîné par un moto-réducteur prévu à cet effet. Ce câble est généralement monté dans une gaine, elle-même placée dans le rail correspondant.

Comme déjà mentionné, dans de tels systèmes motorisés, il est souhaitable de disposer de moyens de sécurité, permettant de prévenir les risques de pincement, notamment lorsque la barre de tirage 13 vient en appui contre la tablette arrière, pour recouvrir la fente 14.

L'invention apporte une solution particulière à ce problème, consistant à ralentir, de façon purement mécanique, le déplacement de la barre de tirage en fin de course. Ainsi, un doigt resté entre la barre de tirage et la tablette arrière subit une pression progressive, laissant le temps à la personne de retirer son doigt sans être blessée, avant que la pression ne devienne trop forte.

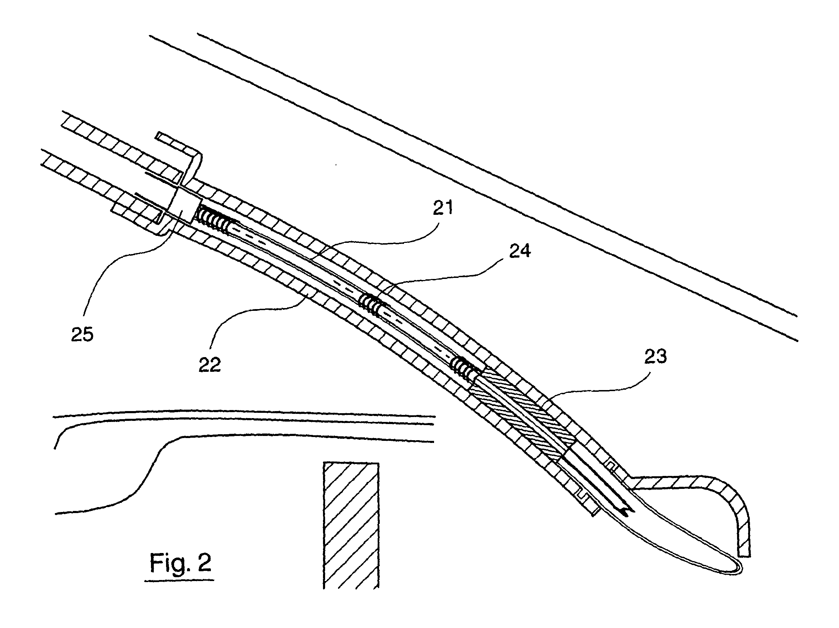

Ce résultat est obtenu en mettant en oeuvre des moyens élastiques, agissant de façon adéquate sur la barre de tirage. Selon le mode de réalisation illustré en figure 2, ces moyens élastiques sont constitués par un ressort 21 agissant en compression, lorsqu'un doigt, ou plus généralement un objet quelconque, est placé entre la barre de tirage et la tablette arrière. Cette compression progressive laisse le temps à l'utilisateur de réagir, et de retirer son doigt.

Sur la vue en coupe de la figure 2, on distingue une portion inférieure 22 d'un des rails 17 et 18, dans lequel circule le patin de tirage 23 est monté, par exemple, sur le câble 24 qui assure son entraînement dans le rail 22.

Selon l'invention, on a dénudé une portion du câble 24 (classiquement entourée d'une gaine) et remplacé la portion supprimée de la gaine par un ressort spiral 21. Ce ressort est préférentiellement un ressort à spires jointives.

Il peut par exemple s'étendre sur une distance sur 50 à 100 mm (par exemple 70 mm). Il est maintenu entre un tampon 25 et le patin de tirage 23.

On comprend que, dans la configuration illustrée en figure 2, lorsque le patin de tirage 23 est bloqué, ou subit une résistance, du fait par exemple de la présence d'un doigt, lors du repliement, le ressort 21 va se comprimer progressivement.

La longueur du ressort est choisie en tenant compte de l'inclinaison du rail 22, correspondant sensiblement à celle de la vitre 26, pour offrir une plage de sécurité suffisante verticalement, par exemple de l'ordre de 3 à 10 mm, permettant à un utilisateur de retirer son doigt.

On obtient ainsi une fonction anti-pincement, ou plus précisément de prévention avant pincement, correspondant à un ralentissement en fin de course.

Il est bien sûr possible de positionner de la même façon un ressort de l'autre côté du patin de tirage 23, pour obtenir une fonction similaire en fin de course de déploiement de la barre de tirage.

Plus généralement, on comprend que d'autres moyens élastiques, montés de façon différente, mais fournissant la même fonction peuvent être mis en oeuvre.

Par ailleurs, il est à noter que le ressort 21 peut être utilisé pour contrôler l'électronique pilotant les moyens de motorisation de façon simple et efficace. Notamment, lorsque le ressort atteint un niveau de compression prédéterminé, cela peut entraîner l'arrêt du moteur.

Ainsi, un objet restant par inadvertance entre la barre de tirage et la tablette arrière entraînera une compression du ressort qui provoquera l'arrêt du moteur. Celui-ci ne restera pas en marche, mais ne forcera donc pas, bien que la toile ne soit pas complètement repliée. Il suffira de retirer l'objet (qui n'est pas fortement bloqué, du fait de la présence du ressort) pour résoudre le problème. Le ressort étant alors détendu, le moteur pourra redémarrer et finir le repliement.

## Revendications

1. Store pour véhicule automobile, comprenant une barre de tirage (13) entraînant un écran souple (11) et guidée à ses deux extrémités par des éléments de tirage (23) circulant dans des rails (17, 18) prévus à cet effet,
**caractérisé en ce que** chacun desdits éléments de tirage est entraîné par un câble d'actionnement (24), et **en ce qu'**il comprend des moyens élastiques (21) montés sur ledit câble d'actionnement et agissant sur au moins un desdits éléments de tirage lorsqu'il arrive en fin de course, lors du repliement et/ou du déploiement dudit écran souple (11), de façon à s'opposer à son déplacement et à le ralentir.

2. Store selon la revendication 1, **caractérisé en ce que** lesdits moyens élastiques comprennent un ressort (21).

3. Store selon la revendication 2, **caractérisé en ce que** ledit ressort (21) est un ressort à spires jointives.

4. Store selon l'une quelconque des revendications 2 et 3, **caractérisé en ce que** ledit ressort (21) est monté sur ledit câble d'actionnement (24) entre ledit élément de tirage (23) et un élément tampon (25).

5. Store selon la revendication 4, **caractérisé en ce que** ledit câble d'actionnement (24) circule dans une gaine, dont une portion a été supprimée et remplacée par ledit ressort.

6. Store selon la revendication 5, **caractérisé en ce que** ladite portion supprimée présente une longueur comprise entre 5 et 10 cm.

7. Store selon l'une quelconque des revendications 1 à 6, **caractérisé en ce que** lesdits moyens élastiques (21) sont montés au-dessus de l'élément de tirage (23) correspondant, et travaillent en compression lors du repliement du store.

8. Store selon l'une quelconque des revendications 1 à 7, **caractérisé en ce que** lesdits moyens élastiques agissent sur des moyens commande de motorisation dudit store, de façon à ralentir ou arrêter le déplacement de la barre de tirage lorsqu'au moins un seuil prédéterminé de compression ou de tension est atteint.

9. Véhicule automobile comprenant au moins un store équipé d'une barre de tirage (13) entraînant un écran souple (11) et guidée à ses deux extrémités par des éléments de tirage (23) circulant dans des rails (17, 18) prévus à cet effet,
**caractérisé en ce que** chacun desdits éléments de tirage du ou desdits stores est entraîné par un câble d'actionnement (24), et **en ce qu'**il comprend des moyens élastiques (21) montés sur ledit câble d'actionnement et agissant sur au moins un desdits éléments de tirage (23) lorsqu'il arrive en fin de course, lors du repliement et/ou du déploiement dudit écran souple, de façon à s'opposer à son déplacement et à le ralentir.

## Patentansprüche

1. Sonnenrollo für Kraftfahrzeuge, das eine Zugstange (13) umfasst, die eine biegsame Leinwand (11) mitnimmt, welche an beiden Enden von Zugelementen (23) geführt wird, die selbst in dazu vorgesehene Schienen (17, 18) läuft, **dadurch gekennzeichnet, dass** jedes dieser Zugelemente von einem Betätigungskabel (24) mitgenommen wird und, dass es über elastische Mittel (21) verfügt, die auf diesem Betätigungskabel angebracht sind und auf mindestens eines der Zugelemente wirken, wenn ein solches Zugelement beim Zusammenfalten und/oder beim Entfalten der biegsamen Leinwand (11) an das Ende seiner Laufbahn ankommt, um sich der Bewegung entgegenzusetzen und die Leinwand zu verlangsamen.

2. Sonnenrollo nach Anspruch 1, **dadurch gekennzeichnet, dass** die elastischen Mittel eine Feder (21) umfassen.

3. Sonnenrollo nach Anspruch 2, **dadurch gekennzeichnet, dass** es sich bei der Feder (21) um eine Spiralfeder mit aneinander liegenden Windungen handelt.

4. Sonnenrollo nach einem der Ansprüche 2 oder 3, **dadurch gekennzeichnet, dass** die Feder (21) auf dem Betätigungskabel (24) angebracht ist, zwischen dem Zugelement (23) und einem Pufferelement (25).

5. Sonnenrollo nach Anspruch 4, **dadurch gekennzeichnet, dass** das Betätigungskabel (24) in einer Hülle läuft, von der ein Teil entfernt und durch die Feder ersetzt wurde.

6. Sonnenrollo nach Anspruch 5, **dadurch gekennzeichnet, dass** der besagte entfernte Teil eine Länge zwischen 5 und 10 cm aufweist.

7. Sonnenrollo nach einem der Ansprüche 1 bis 6, **dadurch gekennzeichnet, dass** die elastischen Mittel (21) oberhalb des entsprechenden Zugelementes (23) angebracht sind und beim Zusammenfalten des Sonnenrollos auf Kompression arbeiten.

8. Sonnenrollo nach einem der Ansprüche 1 bis 7, **dadurch gekennzeichnet, dass** die elastischen Mittel derart auf Steuermittel zur Motorisierung des Sonnenrollos wirken, dass die Bewegung der Zugstange verlangsamt oder angehalten wird, wenn mindestens ein vorgegebener Schwellenwert für die Kompression oder die Zugspannung erreicht wird.

9. Kraftfahrzeug, das über mindestens ein Sonnerollo verfügt, das mit einer Zugstange (13) ausgerüstet ist, die eine biegsame Leinwand (11) mitnimmt und an beiden Enden durch Zugelemente (23) geleitet wird, die in dazu vorgesehene Schienen (17, 18) laufen, **dadurch gekennzeichnet, dass** jedes dieser Zugelemente des erwähnten Sonnenrollos bzw. der erwähnten Sonnenrollos von einem Betätigungskabel (24) mitgenommen wird und, dass es über elastische Mittel (21) verfügt, die auf diesem Betätigungskabel angebracht sind und auf mindestens eines der Zugelemente (23) wirken, wenn ein solches Zugelement beim Zusammenfalten und/oder beim Entfalten der biegsamen Leinwand (11) an das Ende seiner Laufbahn ankommt, um sich der Bewegung entgegenzusetzen und die Leinwand zu verlangsamen.

## Claims

1. Motor vehicle blind, comprising a drawing bar (13) which drives a flexible screen (11) and is guided at its two ends by drawing elements (23) moving in rails (17, 18) provided for this purpose,
**characterised in that** each of the said drawing elements is driven by an actuating cable (24) and **in that** it comprises elastic means (21) mounted on the said actuating cable and acting on at least one of the said drawing elements when it arrives at the end of travel, on withdrawal and/or deployment of the said flexible screen (11), so as to oppose its displacement and slow it down.

2. Blind according to Claim 1, **characterised in that** the said elastic means comprise a spring (21).

3. Blind according to Claim 2, **characterised in that** the said spring (21) is a spring with closely wound coils.

4. Blind according to either one of Claims 2 and 3, **characterised in that** the said spring (21) is mounted on the said actuating cable (24) between the said drawing element (23) and a buffer element (25).

5. Blind according to Claim 4, **characterised in that** the said actuating cable (24) moves in a sheath, a portion of which has been removed and replaced by the said spring.

6. Blind according to Claim 5, **characterised in that** the said removed portion has a length of between 5 and 10 cm.

7. Blind according to any one of Claims 1 to 6, **characterised in that** the said elastic means (21) are mounted above the corresponding drawing element (23) and work in compression on withdrawal of the blind.

8. Blind according to any one of Claims 1 to 7, **characterised in that** the said elastic means act on motorisation control means of the said blind, so as to slow down or stop the displacement of the drawing bar when at least a predetermined compression or tension threshold is reached.

9. Motor vehicle comprising at least one blind equipped with a drawing bar (13) which drives a flexible screen (11) and is guided at its two ends by drawing elements (23) moving in rails (17, 18) provided for this purpose, **characterised in that** each of the said drawing elements of the said blind(s) is driven by an actuating cable (24) and **in that** it comprises elastic means (21) mounted on the said actuating cable and acting on at least one of the said drawing elements (23) when it arrives at the end of travel, on withdrawal and/or deployment of the said flexible screen, so as to oppose its displacement and slow it down.
